# EUROPEAN PATENT APPLICATION

(11) **EP 2 536 086 A1**
(43) Date of publication of application: **19.12.2012**
(21) Application number: 11741842.6
(22) Date of filing: 14.01.2011
(51) Int. Cl.: H04L 25/38

(54) **METHOD AND DEVICE FOR GENERATING PRECODING MATRIX CODEBOOK AND METHOD FOR DESIGNATING PRECODING MATRIX**

(30) Priority: 09.02.2010 CN 201010115413
(71) Applicant: Fujitsu Limited, Kawasaki-shi, Kanagawa 211-8588 (JP)
(72) Inventor: ZHANG, Jie, Beijing 100025 (CN); WANG, Jian, Beijing 100025 (CN); ZHOU, Hua, Beijing 100025 (CN)
(74) Representative: Stebbing, Timothy Charles
(86) International application number: PCT/CN2011/070266
(87) International publication number: WO 2011/097971

(57) **Abstract**

The present invention discloses a method and device for generating precoding matrix codebook and a method for a base station designating precoding matrix in multi-antenna communication system. The method for generating a precoding matrix codebook includes the following steps: the step of obtaining a selection probability: obtaining a selection probability allowed for each Rank by the multi-antenna communication system in the case of a certain Signal Noise Ratio (SNR); the step of determining a codebook size: determining a precoding matrix codebook size for a corresponding Rank according to the selection probability for each Rank in the case of the certain SNR; and the step of determining a codebook: determining a precoding matrix codebook for each Rank from the precoding matrix complete set according to the codebook size for each Rank in the case of the certain SNR.

## Description

### FIELD OF THE INVENTION

The application generally relates to a wireless communication system, and particularly to a method and an apparatus for generating and using a precoding matrix codebook in a multi-antenna communication system.

### BACKGROUND OF THE INVENTION

By now, wireless communication systems have been developed rapidly. The traditional second-generation mobile communication system, i.e. Global System for Mobile Communication (GSM), is continuously evolving toward General Packet Radio Service (GPRS) and Enhanced Data Rates for GSM Evolution (EDGE), to greatly improve data transmission capacity of the system. The third-generation mobile communication system with a higher transmission rate, such as Wideband Code Division Multiple Access (WCDMA) and CDMA2000, has been deployed in many countries and regions worldwide for starting to be put into commercial use. During the development of cellular communication technology, other wireless access technologies, such as Wireless LAN (WLAN) and Worldwide Interoperability for Microwave Access (WiMAX) technology, have been developed rapidly. In addition, an IEEE 802.16m technology facing the fourth-generation mobile communication system, a Third-Generation Partnership Project Long Term Evolution (3GPP LTE) technology and a Third-Generation Partnership Project Long Term Evolution-Advanced (3GPP LTE-Advanced) technology have entered into a research and development stage.

A multi-antenna system for MIMO (Multi-input Multi-output) can offer large increases in throughput due to its ability to support parallel data stream transmission, and draws more and more attention in academic researches and practical systems. Generally, in multi-antenna transmission, the parallel data streams are suffered to coding with forward error correction codes separately, and then the coded code words are mapped onto one or more transmission layers. To map the coded words onto multiple transmission layers, the serial data output from a coder are converted into parallel data on the respective layers. The maximum number of transmission layers supported by the system in one transmission is also referred to as a Rank of the system.

Generally, the number of the transmission layers or the Rank supported by the multi-antenna system is less than or equal to the number of physical antennas of the multi-antenna system. The process for transforming the data on the layers into data on the physical antennas is called as "pre-encoding" of a signal. In particular, the process for transforming the data on the layers into the data on the physical antennas by a linear operation is called as "linear pre-encoding" of the signal. In the existing wireless communication systems such as an LTE system and a WiMax system, it is needed to design a certain number of precoding matrices in advance for the system due to limitations in computational complexity and signaling control complexity of the system. A set of precoding matrices is called as a precoding matrix codebook, and the number of the precoding matrices in the precoding matrix codebook is called as the size of the precoding matrix codebook. In a multi-antenna system, the performance index of the system, such as throughput, is influenced directly by the precoding matrix codebook as well as the size of the precoding matrix codebook and the precoding matrices in the codebook precoding matrix book. Therefore, in order to achieve optimum system performance, it is necessary to design the precoding matrix codebook of the multi-antenna system, including the size of the precoding matrix codebook and precoding matrix code words of the precoding matrix codebook.

### SUMMARY OF THE INVENTION

A brief summary of the present invention is given hereinafter, so as to provide basic understanding on some aspects of the present invention. It should be understood that, the summary is not an exhaustive summary of the present invention. It neither intends to identify the critical or important part of the invention, nor intends to limit the scope of the present invention. It only aims to present some concepts in a simplified form as a prelude to the more detailed description to be discussed later.

According to one aspect of the present invention, there is provided a method for generating a precoding matrix codebook. The method includes: a selection probability obtaining step: obtaining a selecting probability for each Rank allowed by a multi-antenna communication system in the case of a determined Signal-Noise-Ratio (SNR); a codebook size determining step: determining a precoding matrix codebook size for each Rank according to the selecting probability for the Rank in the case of the determined SNR; and a codebook determining step: determining, from a precoding matrix collection, a precoding matrix codebook for each Rank according to the precoding matrix codebook size for the Rank in the case of the determined SNR.

According to another aspect of the present invention, there is provided a method for designating a precoding matrix by a base station in a multi-antenna communication system, wherein the multi-antenna communication system includes at least one base station and at least one mobile station. The method includes: a precoding matrix selecting step: selecting, by the base station, a precoding matrix codebook to be designated for communication between the base station and the mobile station, from at least one precoding matrix codebook stored in the base station, according to information of a signal received from the mobile station; a downlink signaling generating step: generating, based on the selected precoding matrix, downlink signaling which contains information indicating the selected precoding matrix; and a downlink signaling transmitting step: transmitting the generated downlink signaling to the mobile station, wherein the at least one precoding matrix codebook stored in the base station is the precoding matrix codebook generated according to the above method.

According to another aspect of the present invention, there is provided an apparatus for generating a precoding matrix codebook. The apparatus includes: a selection probability obtaining unit: configured to obtain a selection probability for each Rank allowed by a multi-antenna communication system in the case of a determined SNR; a codebook size determining unit: configured to determine a precoding matrix codebook size for each Rank according to the selection probability for the Rank in the case of the determined SNR; and a codebook determining unit: configured to determine, from a precoding matrix collection, a precoding matrix codebook for each Rank according to the precoding matrix codebook size for the Rank in the case of the determined SNR.

According to other aspects of the present invention, there are provided corresponding computer program codes, a corresponding computer storage medium and a corresponding computer program product.

By the solution of the present invention, the proportion distribution of the codebook sizes for different Ranks is optimized for a common correlative channel model such as a half-wavelength interval dual-polarized channel model, thus maximizing system capacity and supporting higher system transmission efficiency.

These and other advantages of present invention will become more apparent through the detailed descriptions of the preferred embodiment of the present invention in conjunction with drawings.

### BRIEF DESCRIPTION OF THE DRAWINGS

The present invention will be well understood through descriptions given hereinafter in conjunction with the drawings. Throughout the drawings, the same or similar reference numerals indicate the same or similar components. The drawings, together with the following detailed descriptions, are contained in the specification, for forming a part of the specification and being used to further illustrate the preferred embodiments of the present invention and interpret the principle and advantages of the present invention. In the drawings:

Figure 1 shows a schematic diagram of precoding matrix grouping according to an embodiment of the present invention.

Figure 2 shows a schematic diagram of precoding matrix grouping according to another embodiment of the present invention.

Figure 3 shows system capacities for different Ranks as a function of SNR according to an embodiment of the present invention.

Figure 4 shows a flowchart of a method for generating a precoding matrix codebook according to an embodiment of the present invention.

Figure 5 shows selection probabilities for different Ranks as a function of SNR according to an embodiment of the present invention.

Figure 6 shows a flowchart of a method for generating a precoding matrix codebook according to another embodiment of the present invention.

Figure 7 shows a flowchart of a method for designating a precoding matrix by a base station according to an embodiment of the present invention.

Figure 8 shows a flowchart of a method for performing precoding with a precoding matrix by a mobile station according to an embodiment of the present invention.

Figure 9 shows a structural schematic diagram of an apparatus for generating a precoding matrix codebook according to an embodiment of the present invention.

Figure 10 shows a structural schematic diagram of an apparatus for generating a precoding matrix codebook according to another embodiment of the present invention.

Figure 11 shows an exemplary structural block diagram of a general personal computer in which the method and/or the apparatus according to the embodiments of the present invention can be implemented.

### DETAILED DESCRIPTION OF THE INVENTION

Exemplary embodiments of the present invention are described hereinafter with reference to the drawings. For clarity and concision, not all features of the actual embodiments are described in the description. However, it should be understood that, many decisions specific for the embodiments will be done during development of the embodiments, in order to achieve the specific target of the developers, for example, to satisfy restrictions associated with the system and services which are likely to change with different embodiments. In addition, it should be understood that although the development may be very complex and time-consuming, the development is just a routine task for those skilled in the art who benefit from the present disclosure.

It should be noted here that, in order to avoid the present invention from being obscured due to unnecessary details, only apparatus structures and/or processing steps that are closely related to the solutions of the present invention are shown in the drawings and other details not so closely related to the present invention are omitted.

### Precoding matrix collection

A precoding matrix codebook is formed by one or more precoding matrices. Therefore, a situation for designing a precoding matrix codebook is that there exists a collection of precoding matrices from which the precoding matrices for generating the precoding matrix codebook can be selected. Those skilled in the art should understand that, the collection of precoding matrices satisfying the design conditions can be achieved by using various existing technologies.

An example of the precoding matrix collection is given hereinafter. Each precoding matrix in the precoding matrix collection is actually a matrix with p rows and n columns, wherein P represents the number of the transmitting antennas in the communication system and Q represents the Rank of the communication system. Specifically, the precoding matrix has the following form: [1, 1, ... 1; x_{11,} x₁₂, ..., x_{1q}; x₂₁, x₂₂, ..., x_{2q}; ..., ..., ...; xₚ₁, xₚ₂, .. , x_{pq}], where p is an integer and 1≤p≤P, q is an integer and 1≤q≤Q. As mentioned above, the number of all the layers supported by the system in one transmission is also known as a Rank of the system. Those skilled in the art should understand that the precoding matrix collection given here is only an example and does not intend to limit the present invention. Other forms of precoding matrix collection can also be used to provide the precoding matrices for generating the precoding matrix codebook.

For facilitating illustration, a 4-antenna system is taken as an example to illustrate the forming of a precoding matrix collection. In such a system, the number of the layers supported by the system can be 1, 2, 3 or 4, that is, the Rank can be 1, 2, 3 or 4.

As an example, when the Rank is 1, a precoding matrix V has a form of [1; x₁₁; x₂₁; x₃₁]. For example, the precoding matrix collection can be formed by one or more of the following types of precoding matrices satisfying this form.

From a DFT (Discrete Fourier Transform) matrix, 4 precoding matrices can be obtained, wherein each of the precoding matrices corresponds to a column of the DFT matrix.

From a Hadamard matrix, 4 precoding matrices can be obtained, wherein each of the precoding matrices corresponds to a column of the Hadamard matrix.

In addition, x₁₁, x₂₁ and x₃₁ can be QPSK constellation points, 8PSK constellation point, 16PSK constellation points or PSK constellation points with more dimensions.

For example, if x₁₁, x₂₁, x₃₁ are QPSK constellation points, the total number of the precoding matrices that can be obtained satisfying the above form is 4×4×4 = 64.

For another example, if x₁₁, x₂₁, x₃₁ are 8PSK constellation points, the total number of the precoding matrices that can be obtained satisfying the above form is 8×8×8 = 512.

As another example, if x₁₁, x₂₁, x₃₁ are 16PSK constellation points, the total number of the precoding matrices that can be obtained satisfying the above form is 16×16×16 = 4096.

Of course, there may be other forms of precoding matrices with Rank = 1.

According to the requirements of the system, one, or several, or all forms of precoding matrices as described above, or power normalization matrices thereof can be used as the collection of the precoding matrices with Rank = 1.

As another example, when Rank = 2, the precoding matrix V has a form of [1 1; x_{11 x12}; x₂₁ x₂₂; x₃₁ x₃₂]. Similarly, the precoding matrix collection can be formed by one or more of the following types of precoding matrices. In addition, as an example, V is a unitary matrix, i.e. V^{H} ×V = α I, where α is a scalar, I is an identity matrix.

From a DFT matrix, 6 precoding matrices can be obtained, wherein each of the precoding matrices corresponds to two columns selected from the DFT matrix.

From a Hadamard matrix, 6 precoding matrices can be obtained, wherein each of the precoding matrices corresponds to two columns selected from the Hadamard matrix.

In addition, x₁₁ x₁₂ x₂₁ x₂₂ x₃₁ x₃₂ can be QPSK constellation points, 8PSK constellation points, 16PSK constellation points or PSK constellation points with more dimensions.

For example, if x₁₁ x₁₂ x₂₁ x₂₂ x₃₁ x₃₂ are QPSK constellation points, the total number of the precoding matrices that can be obtained satisfying the above form is 288.

For another example, if x₁₁ x₁₂ x₂₁ x₂₂ x₃₁ x₃₂ are 8PSK constellation points, the total number of the precoding matrices that can be obtained satisfying the above form is 5376.

As another example, if x₁₁ x₁₂ x₂₁ x₂₂ x₃₁ x₃₂ are 16PSK constellation points, the total number of the precoding matrices that can be obtained satisfying the above form is 92160.

Of course, there may be other forms of precoding matrices with Rank = 2.

According to the requirements of the system, one, or several, or all forms of precoding matrices described above, or power normalization matrices thereof can be used as the collection of the precoding matrices with Rank = 2.

The cases of Rank = 3 and Rank = 4 are similar with the above situation, which will not be described in detail herein.

In the case of other antenna configurations, such as a 2-antenna system, a 8-antenna system or a system with more antennas, the process of forming a precoding matrix collection is similar to the process of forming the precoding matrix collection for the 4-antenna system described above, which will not be described in detail herein.

### Modified precoding matrix collection

Generally, during designing a codebook, it needs to consider computational complexity of the precoding matrices to be used, that is, it needs to consider computational complexity of elements contained in the precoding matrices. For example, a design criteria based on π/4 is adopted during designing a common codebook since the value of exp (j *π/ 4 * k) are 0.707 * (± 1 ± i) or 1, -1 , ± i. The computational complexity of the precoding matrices in this case is low. However, due to using π/4 as a unit to split the entire angle space of 0 to 2 π, only 8 precoding matrices can be obtained for each Rank, and the maximum number of precoding matrices that can be obtained for each Rank is only 16 even after rotation. Therefore, in actual applications, due to the relatively small number of precoding matrices for each Rank, the error in the corresponding channel direction is likely to be relatively large, thus limiting the performance of the system greatly.

In order to achieve more precoding matrices to improve the performance of the system and satisfy the requirement of simple computation at the same time, according to an embodiment of the present invention, there is provided a codebook designed based on π/6. Specifically, each element of the precoding matrices of the codebook for all Ranks in a precoding matrix collection has a phase angle which is an integral multiple of π/6. In this way, since the value of Cos(π/6*k) or sin (π/6*k) is ± 1/2 or ± 1.732/2, its computational complexity is slightly higher than that in the case of π/4. However, due to using π/6 as a unit to split the entire angle space of 0 to 2π, 12 precoding matrices can be obtained for each Rank, and the maximum number of the precoding matrices that can be obtained is 24 after rotation, thus matching with the corresponding channel direction better, and thereby enhancing the overall performance of the system.

In the following, a precoding matrix collection provided according the embodiment of the present invention is given. The precoding matrix collection is designed for a communication system which has 8 transmitting antennas and can support 8 Ranks at most.

Precoding matrix collection for Rank 1 (Table 1)

| **1 (v1)** | | **2 (v2)** | | **3 (v3)** | | **4 (v4)** | |
|---|---|---|---|---|---|---|---|
| 1.00 | | 1.00 | | 1.00 | | 1.00 | |
| 1.00 | | 0.8660 | 0.5000i | 0.5000 | 0.8660 | 0.0000 | 1.0000i |
| 1.00 | | 0.5000 | 0.8660i | 0.5000 | 0.8660i | 1.0000 | 0.0000i |
| 1.00 | | 0.0000 | 1.0000i | 1.0000 | 0.0000i | 0.0000 | 1.0000i |
| 1.00 | | 0.5000 | 0.8660i | 0.5000 | 0.8660i | 1.00 | |
| 1.00 | | 0.8660 | 0.5000i | 0.5000 | 0.8660 | 0.0000 | 1.0000i |
| 1.00 | | 1.0000 | 0.0000i | 1.00 | | 1.0000 | 0.0000i |
| 1.00 | | -0.8660 | -0.5000i | 0.5000 | - 0.8660 | -0.0000 | -1.0000i |

| **5 (v5)** | | **6 (v6)** | | **7 (v7)** | | **8 (v8)** | |
|---|---|---|---|---|---|---|---|
| 1.00 | | 1.00 | | 1.00 | | 1.00 | |
| 0.5000 | 0.8660i | 0.8660 | 0.5000i | 1.0000 | 0.0000i | 0.8660 | 0.5000i |
| 0.5000 | 0.8660i | 0.8000 | 0.8660i | 1.00 | | 0.5000 | 0.8660i |
| 1.00 | | 0.0000 | 1.0000i | 1.0000 | 0.0000i | 0.0000 | 1.0000i |
| 0.5000 | 0.8660i | 0.5000 | 0.8660i | 1.00 | | 0.5000 | 0.8660i |
| 0.5000 | 0.8660i | 0.8660 | 0.5000i | 1.0000 | 0.0000i | 0.8660 | 0.5000i |
| 1.00 | | 1.0000 | 0.0000i | 1.00 | | 1.0000 | 0.0000i |
| 0.5000 | 0.8660i | 0.8660 | 0.5000i | 1.0000 | 0.00001 | 0.8660 | 0.5000i |

| **9 (v9)** | | **10 (v10)** | | **11 (v11)** | | **12 (v12)** | |
|---|---|---|---|---|---|---|---|
| 1.00 | | 1.00 | | 1.00 | | 1.00 | |
| 0.5000 | 0.8660i | 0.0000 | 1.0000i | 0.5000 | 0.8660 | 0.8660 | 0.5000i |
| 0.5000 | 0.8660i | 1.0000 | 0.0000i | 0.5000 | 0.8660i | 0.5000 | 0.8660i |
| 1.00 | | 0.0000 | 1.0000i | 1.0000 | 0.0000i | 0.0000 | 1.0000i |
| 0.5000 | 0.8660i | 1.00 | | 0.5000 | 0.8660i | 0.5000 | 0.8660i |
| 0.5000 | 0.8660i | 0.0000 | 1.0000i | 0.5000 | 0.8660 | 0.8660 | 0.5000i |
| 1.00 | | 1,0000 | 0.0000i | 1.00 | | 1.0000 | 0.0000i |
| 0.5000 | 0.8660i | 0.0000 | 1.0000i | 0.5000 | 0.8660 | 0.8660 | 0.5000i |

| **13 (v13)** | | **14 (v14)** | | **15 (v15)** | | **16 (v16)** | |
|---|---|---|---|---|---|---|---|
| 1.00 | | 1.00 | | | 1.00 | 1.00 | |
| 1.00 | | 0.8660 | 0.5000i | 0.5000 | 0.8660 | 0.0000 | 1.0000i |
| 0.8660 | 0.5000i | 0.0000 | 1.0000i | 0.8660 | 0.5000i | 0.8660 | 0.5000i |
| 0.8660 | -0.5000i | -0.5000 | -0.8660i | -0.8660 | -0.5000i | 0.5000 | -0.8660i |
| 0.5000 | -0.8660i | -1.0000 | -0.0000i | 0.5000 | -0.8660 | 0.5000 | -0.8660i |
| 0.5000 | 0.8660i | 0.8660 | 0.5000i | 1.00 | | 0.8660 | 0.5000i |
| 0.0000 | 1.0000i | 0.0000 | 1.0000i | 0.0000 | 1.0000 | 0.0000 | 1.0000i |
| 0.0000 | 1.0000 | 0.5000 | 0.8660i | 0.8660 | 0.5000i | 1.00 | |

| **17 (v17)** | | **18 (v18)** | | **19 (v19)** | | **20 (v20)** | |
|---|---|---|---|---|---|---|---|
| 1.00 | | 1.00 | | 1.00 | | 1.00 | |
| 0.5000 | 0.8660i | 0.8660 | 0.5000i | 1.0000 | 0.00001 | 0.8660 | 0.5000i |
| 0.0000 | 1.0000i | 0.8660 | 0.5000 | 0.8660 | 0.5000 | 0.0000 | 1.0000i |
| 0.8660 | 0.5000i | 0 5000 | 0.8660i | 0.8660 | 0.5000i | 0.5000 | 0.8660i |
| 1.0000 | 0.0000i | 0.5000 | 0.8660i | 0.5000 | 0.8660 | 1.0000 | 0 0000i |
| 0.5000 | -0.8660 | 0.0000 | -1.0000i | -0.5000 | -0.8660i | 0.8660 | -0.5000i |
| 0.0000 | 1.0000 | 0 0000 | 1.0000i | 0 0000 | 1.0000 | 0.0000 | 1 0000i |
| 0.8660 | 0.5000i | 0.5000 | 0.8660i | 0.0000 | 1.0000i | 0.5000 | 0.8660i |

| **21 (v21)** | | **22 (v22)** | | **23 (v23)** | | **24 (v24)** | |
|---|---|---|---|---|---|---|---|
| 1.00 | | 1.00 | | 1.00 | | 1.00 | |
| 0.5000 | 0.8660i | 0.0000 | 1.0000i | 0.5000 | 0.8660i | 0.8660 | 0.5000i |
| 0.8660 | 0.5000i | 0.8660 | 0.5000i | 0.0000 | 1.0000i | 0.8660 | 0.5000i |
| 0.8660 | 0.5000i | -0.5000 | 0.8660i | -0.8660 | 0.5000i | -0.5000i | -0.8660i |
| 0.5000 | -0.8660i | .5000 | 0.8660i | -1.0000 | 0.0000i | 0.5000 | -0.8660i |
| 1.0000 | 0.0000i | 0.8660 | 0.5000i | 0.5000 | 0.8660i | 0.0000 | 1.0000i |
| 0.0000 | 1.0000i | 0.0000 | 1.0000i | 0.0000 | 1.0000 | 0.0000 | 1.0000i |
| 0.8660 | 0.5000i | 1.0000 | 0.0000i | 0.8660 | 0.5000 | 0.5000 | 0.8660i |

It be seen from the precoding matrix collection for Rank 1 that, 24 precoding matrices v1 ∼ v24 can be obtained by the design based on π/6.

Based on the above-given precoding matrix collection for Rank 1, a precoding matrix collection for Rank 2 can be further designed. For example, it can be designed as follows.

Precoding matrix collection for Rank 2 (Table 2)

| **1** | **2** | **3** | **4** |
|---|---|---|---|
| [v1, v2] | [v2, v3] | [v3, v4] | [v4, v5] |

| **5** | **6** | **7** | **8** |
|---|---|---|---|
| [v5, v6] | [v6, v7] | [v7, v8] | [v8, v9] |

| **9** | **10** | **11** | **12** |
|---|---|---|---|
| [v9, v10] | [v10, v11] | [v11, v12] | [v12, v13] |

| **13** | **14** | **15** | **16** |
|---|---|---|---|
| [v13, v14] | [v14, v15] | [v15, v16] | [v16, v17] |

| **17** | **18** | **19** | **20** |
|---|---|---|---|
| [v17, v18] | [v18, v19] | [v19, v20] | [v20, v21] |

| **21** | **22** | **23** | **24** |
|---|---|---|---|
| [v21, v22] | [v22, v23] | [v23, v24] | [v24, v25] |

Accordingly, based on the precoding matrix collection for Rank 1, it is easy for those skilled in the art to conceive the design of precoding matrix collections for Rank 3, Rank 4, ..., Rank 8, which will not be described in detail herein.

The codebook provided by the embodiment of the present invention has characteristics of simple computation and better enhancing the performance of the multi-antenna system.

### Precoding matrix grouping

In order to make communication in a multi-antenna system, it is required to use the same precoding matrix between a base station and a mobile station. As a result, information on the precoding matrix, such as the index of the precoding matrix, is required to be delivered between the base station and the mobile station. In the case of a large number of precoding matrices, this may require relatively large overhead.

The inventor has noted that, in the practical operation of the communication system, although the channel for each sub-frame is varying, the Rank value selected by the communication system in order to achieve best performance (for example, the maximum system capacity) is usually slowly varying, and the precoding matrix selected for each sub-frame would not change much more. For example, as for the precoding matrix collection for Rank 1 presented in Table 1 of the aforementioned embodiment, if the precoding matrix selected at the current moment is a precoding matrix corresponding to π/6, then the precoding matrix selected at the next moment may be a precoding matrix nearby the precoding matrix corresponding to π/6, such as a precoding matrix corresponding to 0 or 2π/6.

Based on the above considerations, according to an embodiment of the present invention, there is provided a method for performing grouping on neighboring precoding matrices.

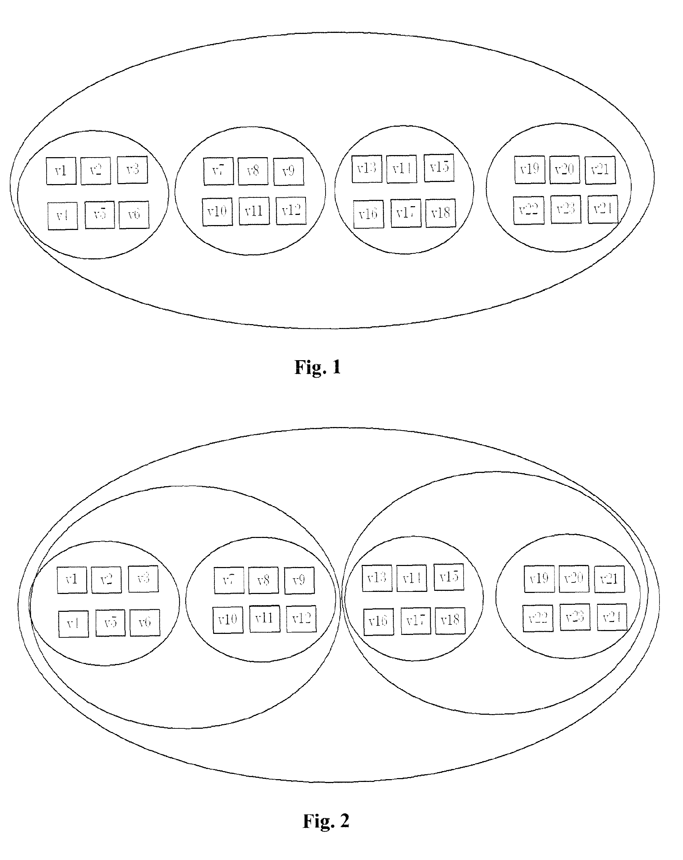

Figure 1 is a schematic diagram showing precoding matrix grouping in the case of 24 precoding matrices. It can be seen from Figure 1 that, 24 precoding matrices in the same precoding matrix collection are divided into 4 groups, wherein v1 ∼ v6, v7 ∼ v12, v13 ∼ v18, v19 ∼ v24 respectively belong to one of the groups.

Since the situation that the selected precoding matrix changes from one group to another group usually occurs within a longer period of time, in the case of performing grouping on neighboring precoding matrices, the sequence number of the group can be fed back in a long time, and only the sequence number of the precoding matrix in the corresponding group is required to be fed back in a short time. Due to the number of code words in a group is relatively small, the situation that only the sequence number of the precoding matrix in the group is fed back can reduce the communication overhead.

It should be noted that, the grouping method of the present embodiment is not limited to the situation that each group includes the same number of precoding matrices, but the number of the precoding matrices included in each group can be designed according to requirements. For example, when the test has shown that the precoding matrices v1 ∼ v8 are used often while v9 ∼ v12 are used less, v1 ∼ v8 can be divided into a group and v9 ∼ v12 can be divided into another group, which does not change the essence of the present invention.

In addition, it should be noted that the grouping method of the embodiment is not limited to the one-layer grouping that is shown above as an example. In other words, multi-layer grouping can be designed in the case of a large number of precoding matrices. As shown in Figure 2, for example, a first group and a second group can be combined into a larger group, a third group and a fourth group can be combined into a larger group, and so on. This is easy to be achieved by those skilled in the art according to actual requirements in light of the concept proposed in the present invention, which will not be described in detail herein.

### Determining codebook by using selection probability for Rank

In the multi-antenna system, it is typically expected that wireless channels are uncorrelated to each other at the base station side in order to obtain a larger space diversity gain. The common multi-antenna systems at present typically include four transmitting antennas. In this case, the uncorrelation among the wireless channels at the base station side can be achieved by increasing the spacing between the transmitting antennas. With the development of technology, there is a trend to use more transmitting antennas, such as the use of 8 or more transmitting antennas. In this case, due to the limitation of the size of the base station, it is impossible to achieve the uncorrelation among the wireless channels by increasing the spacing between the transmitting antennas. Therefore, it needs to consider the half-wavelength interval dual-polarized antenna configuration. Taking 8 transmit antennas as an example, in this dual-polarized antenna configuration, the antenna array is divided into two groups. The 4 antennas in each group form a sub-array with a half-wavelength interval between each other. The two groups of antennas have the same positions, and a cross-polarization configuration is adopted between groups.

The inventor has noted that the channel response of the transmitting antenna with the dual-polarized antenna configuration has strong channel correlation. In theory, when there are for example 8 receiving antennas, the maximum number of transmission layers that can be supported by the 8 transmitting antennas is 8 (i.e. Rank is 8), or, in the case of four receiving antennas, the maximum number of transmission layers that can be supported is 4 (i.e. Rank is 4). However, in most cases, the maximum number of the transmission layers does not mean the maximum system capacity.

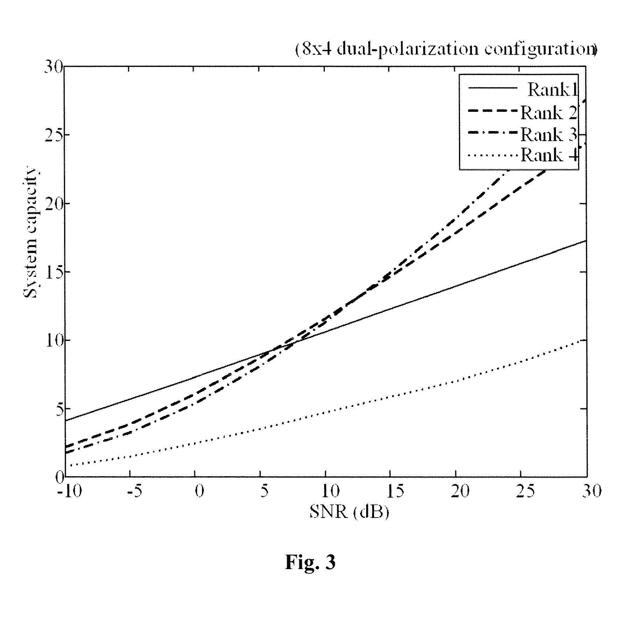

Figure 3 shows system capacities for different Ranks as a function of SNR in a dual-polarized antenna configuration with 8 transmitting antennas and 4 receiving antennas. In this Figure, the test results are shown with different types of lines indicating different Ranks.

It can be seen from Figure 3 that, in the common SNR range of 15dB to 20dB, the case of Rank 3 obtains the maximum system capacity, followed by the Rank 2, Rank 1 and Rank 4. This shows that, not the maximum Rank obtains the maximum system capacity. In order to achieve maximum system capacity, the system will select, in the case of a certain SNR, the most appropriate Rank to match the current channel conditions. In other words, in the case of a certain SNR, the Rank selected to be used by the system has a certain probability distribution, and this feature can be used to design the precoding matrix codebook.

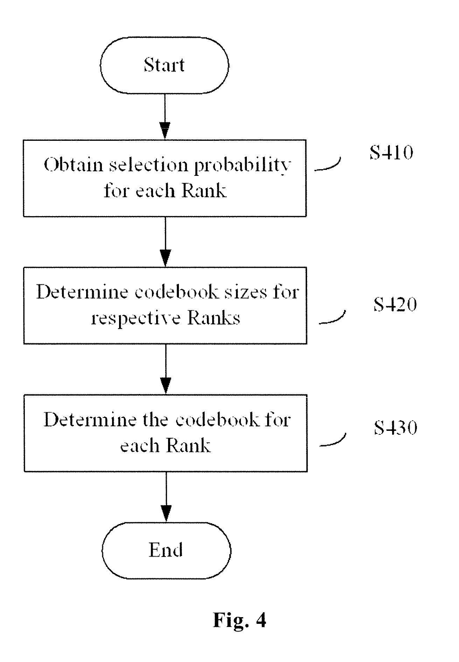

Based on above, according to an embodiment of the present invention, there is provided a method for generating a precoding matrix codebook. Figure 4 shows a flow chart of the method, which includes:

S410: a selection probability is obtained for each Rank allowed by a multi-antenna system in the case of a certain SNR.

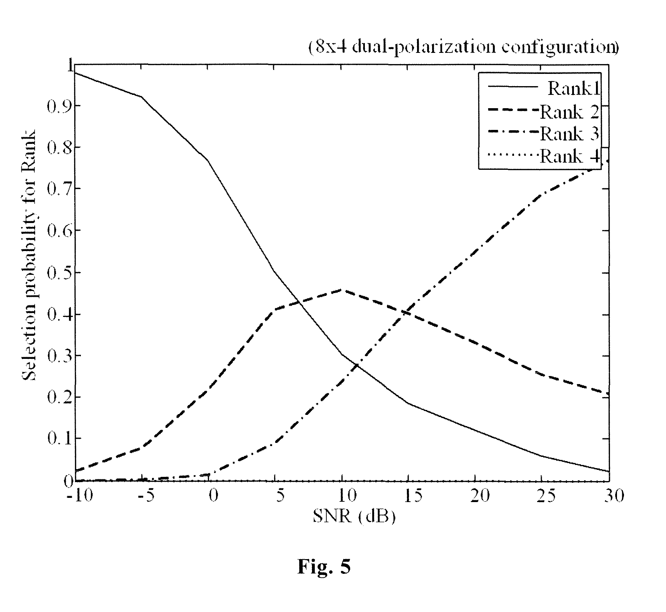

In different SNR conditions, the Rank selected to be used by the system has different probability distribution. As an example, Figure 5 shows the probabilities for selecting different Ranks as a function of SNR in a dual-polarized antenna configuration with 8 transmitting antennas and 4 receiving antennas. It can be seen from the figure that, in the case of 20dB SNR, in order to achieve maximum system capacity, the probability of selecting Rank 3 by the multi-antenna system is about 55%, the probability of selecting Rank 2 is about 32.5%, the probability of selecting Rank 1 is about 12.5 %, and the probability of selecting Rank 4 is close to 0; in the case of 10dB SNR, in order to achieve maximum system capacity, the probability of selecting Rank 2 by the multi-antenna system is about 45%, the probability of selecting Rank 1 is about 30%, the probability of selecting Rank 3 is about 25%, and the probability of selecting Rank 4 is close to 0.

In order to determine the probability distribution, according to an implementation, simulation is made on the channels of the multi-antenna system only with respect to a certain common SNR. For example, 10000 times of independent channel implementations are carried out in the case of 20dB SNR, and the number of Ranks that can be selected is tested in each channel implementation, that is, the number of Ranks when the maximum channel capacity is obtained is tested. Finally, statistics is made to the selection times of each Rank so as to obtain the selection probability for each Rank in the case of this SNR.

It should be noted that, when determining the above probability, the common SNR is not limited to an SNR of 20dB, and those skilled in the art can choose the SNR according to actual situation. For example, it is possible to determine the most common SNR according to the environment of the multi-antenna system and other factors effecting channel quality, and then determine the selection probability for each Rank with respect to this SNR, which does not affect the essence of the present invention.

In order to determine the above probability distribution, according to another implementation, simulation can be made on the channels of the multi-antenna system with respect to multiple SNRs. For example, the simulation can be made with respect to SNRs of -5dB,-4dB,-3dB,...,18dB, 19dB and 20dB respectively, thus obtaining the selection probability for each Rank in the case of each SNR. In this implementation, the step for the SNRs in the simulation can be selected by those skilled in the art according to actual situations, without being limited to the step of 1dB as shown in the above example, which also does not affect the essence of the present invention.

S420: determining the codebook size for each Rank according to the selection probability for the Rank in the case of the determined SNR.

After determining the selection probability for each Rank, the codebook size for the Rank is determined according to the selection probability. Taking the situation that the maximum number of Ranks supported by the system is 4 as an example, assuming that the relationship between the selection probabilities of the different Ranks is: K3>K2>K1>K4, where Kn represents the selection probability for Rank n (n = 1, 2, 3, 4), then the codebook size for each Rank can be designed accordingly in the design of the precoding matrix codebook. For example, as K3 is the maximum, it indicates that it is most likely for the system to use Rank 3 in the application. Therefore, the codebook for Rank 3 should contain the most precoding matrices. As K4 is the minimum, it indicates that it is least likely for the system to use Rank 4 in the application. Therefore, the codebook for Rank 4 can only retain the most basic precoding matrices. By this design approach, the storage space of the system can be fully utilized to achieve optimal system performance.

It should be noted that, since the relationship between the selection probabilities determined for different Ranks is a relationship in terms of statistics, the codebook for each Rank does not need to be designed strictly according to the probability proportion. That is, assuming that the number of the precoding matrices included in the codebook for Rank n is Nn (n = 1, 2, 3, 4), it is not strictly required that N1: N2: N3: N4 = K1: K2: K3: K4. Preferably, if the selection probability for a first Rank is greater than the selection probability for a second Rank, the number of precoding matrices contained in the codebook for the first Rank is greater than or equal to the number of precoding matrices contained in the codebook for the second Rank. That is, when Ki > Kj, Ni ≥ Nj, where i, j = 1, 2, 3, 4. For example, as for the above situation of K3>K2>K1>K4, it is not strictly required for the Nn to have a relationship of N3>N2>N1>N4. Those skilled in the art can make a design according to actual situation after considering the probability relationship, for example, the design may be N3> N2 = N1 > N4. When Ki = Kj, Ni and Nj can be designed as required. In addition, the present invention makes no limitation to the number Nn of the precoding matrices contained in the codebook for each Rank and their total number N1+N2+N3+N4. For example, the following example can be given:

| Rank 1 | Rank 2 | Rank 3 | Rank 4 |
|---|---|---|---|
| 20 | 16 | 16 | 2 |
| 24 | 14 | 12 | 2 |

It can be seen from the table that, the number Nn of the precoding matrices contained in the codebook for each Rank and the total number of Nn can be designed by those skilled in the art as required.

For the case of obtaining the selection probability for each Rank only with respect to a certain common SNR, in step S420, the codebook size for each Rank is determined only with respect to this SNR.

For the case of respectively obtaining the selection probability for each Rank with respect to multiple SNRs. in step S420. the codebook size for each Rank is obtained also respectively with respect to the multiple SNRs.

S430: determining, from a precoding matrix collection, a codebook for each Rank according to the codebook size for each rank in the case of the determined SNR.

Since the codebook size for each Rank has been determined in step S420, a corresponding number of precoding matrices can be selected from the precoding matrix collection to form the codebook for the corresponding Rank according to the codebook size. For example, the codebooks for the respective Ranks can be formed from the precoding matrix collection provided by the preceding embodiment which is designed based on π/6. There are many ways for selecting precoding matrices from the precoding matrix collection. For example, Nn precoding matrices can be arbitrarily selected from the origin codebook for Rank n in the precoding matrix collection to form the codebook for the Rank n. Preferably, the precoding matrices can be selected according to the contribution made by the respective precoding matrices to a performance parameter (such as throughput, mutual information, etc.) of the system, that is, the first Nn precoding matrices making the largest contribution to the performance parameter of the system are selected from the original codebook for Rank n in the precoding matrix collection to form the codebook for this Rank n. In the patent application No. 200910167422.7, entitled "Method and apparatus for generating precoding matrix codebook group" and filed on August 17, 2009, there is described how to select a precoding matrix according to its contribution to the performance parameter of the system. Therefore, it will not be described in detail herein.

For the case of obtaining the selection probability for each Rank only with respect to a certain common SNR and accordingly determining the codebook size for each Rank, in step S430, the codebook for each Rank is determined only with respect to this SNR. Then, in the application of the multi-antenna system, the codebook that is determined according to the selection probability for each Rank with respect to this SNR is used regardless of the actual SNR. In this way, the storage space can be saved significantly and system performance can be improved on the basis of existing technologies.

For the case of respectively obtaining the selection probability for each Rank with respect to multiple SNRs and accordingly determining the codebook size for each Rank, in step S430, the codebook for each Rank is determined respectively with respect to these SNRs. Therefore, in the application of the multi-antenna system, it is according to the actual SNR to selectively use the codebook that is determined according to the selection probability for each Rank with respect to the respective SNR. Although this method consumes more storage space than the former case, it can further improve the system performance.

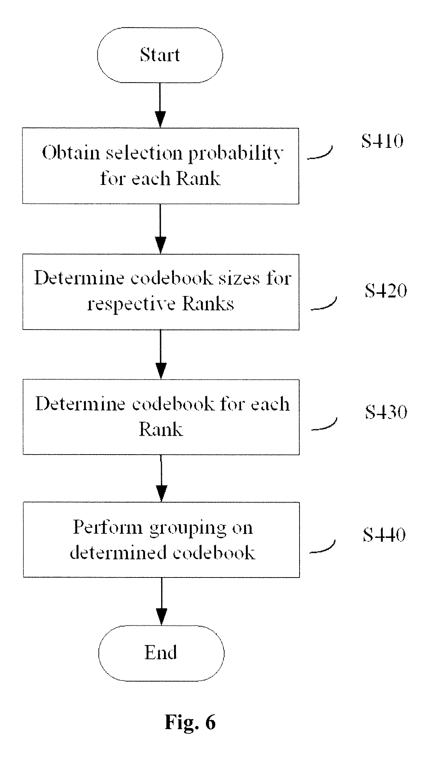

According to a preferred embodiment, as shown in Figure 6, the method for generating a precoding matrix codebook also includes a grouping step S440 for dividing the generated precoding matrix codebook into groups in order to reduce the communication overhead when delivering information on the precoding matrices. The specific grouping method has been illustrated above, and will not be repeated herein.

It should be noted that, although the above method is designed for the multi-antenna system with strong channel correlation, it is easy for those skilled in the art to understand that the method is also available for a multi-antenna system without strong channel correlation, and this does not make a limitation to the proposed method of this embodiment.

### Apparatus for generating precoding matrix codebook

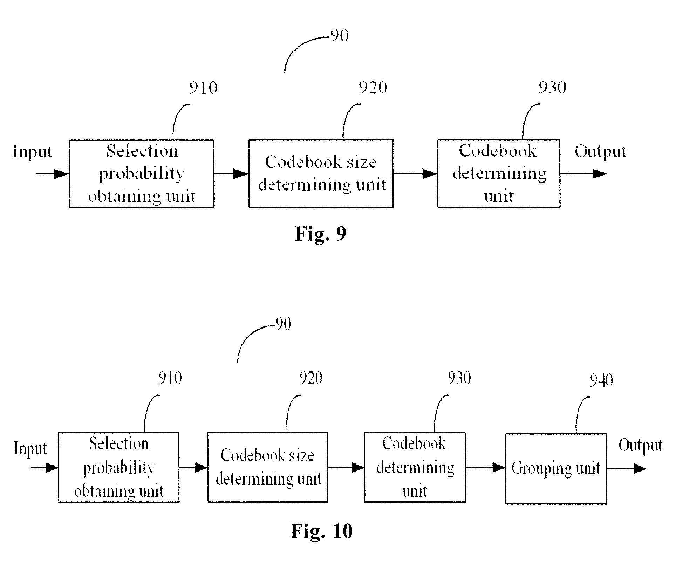

Accordingly, according to an embodiment of the present invention, there is provided an apparatus for generating a precoding matrix codebook. Figure 9 shows a structural schematic diagram of this apparatus.

It can be seen from Figure 9 that, the apparatus 90 for generating a precoding matrix codebook includes: a selection probability obtaining unit 910, a codebook size determining unit 920 and a codebook determining unit 930.

The selection probability obtaining unit 910 is configured to obtain a selection probability for each Rank allowed by the multi-antenna communication system in the case of a determined SNR.

As already described above, for different SNRs, the Rank selected to be used by the system has different probability distribution. For example, Figure 5 shows the probabilities for selecting different Ranks as a function of SNR in a dual-polarized antenna configuration with 8 transmitting antennas and four receiving antennas.

According to an implementation, the selection probability obtaining unit 910 can be configured to obtain a selection probability for each rank allowed by a multi-antenna communication system in the case of a certain common SNR. To this end, for example, simulation on the channels of the multi-antenna system can be made only with respect to a certain common SNR. For example, 10000 times of independent channel implementations are carried out in the case of 20dB SNR, and the number of Ranks that can be selected is tested in each channel implementation, that is, the number of Ranks when the maximum channel capacity is obtained is tested. Finally, statistics is made to the selection times of each Rank so as to obtain the selection probability for each Rank in the case of this SNR.

It should be noted that, when determining the above probability, the common SNR is not limited to 20dB SNR, and those skilled in the art can choose the SNR according to actual situation. For example, it is possible to determine the most common SNR according to the environment of the multi-antenna system and other factors effecting channel quality, and then determine the selection probability for each Rank with respect to this SNR, which does not affect the essence of the present invention.

According to another implementation, the selection probability obtaining unit 910 can be configured to obtain a selection probability for each Rank allowed by the multi-antenna system with respect to multiple SNRs. For example, the simulation on the channels of the multi-antenna system can be made respectively with respect to multiple SNRs. For example, the simulation can be made with respect to SNRs of -5dB,-4dB,-3dB,...,18dB, 19dB and 20dB respectively, thus obtaining the selection probability for each Rank in the case of each SNR. In this implementation, the step for the SNRs in the simulation can be selected by those skilled in the art according to actual situations, without being limited to the step of 1dB as shown in the above example, which also does not affect the essence of the present invention.

A codebook size determining unit 920 is configured to determine the codebook size for each Rank according to the selection probability for the Rank in the case of the determined SNR.

After the selection probability obtaining unit 910 obtains the selection probability for each Rank, the codebook size determining unit 920 determines the codebook size for each Rank according to the selection probability for the respective Rank. Taking the situation that the maximum number of Ranks supported by the system is 4 as an example, assuming that the relationship between the selection probabilities of the different Ranks is: K3> K2> K1>K4, where Kn represents the selection probability for Rank n (n = 1, 2, 3, 4), then the codebook size for each Rank can be designed accordingly in the design of the precoding matrix codebook. For example, as K3 is the maximum, it indicates that it is most likely for the system to use Rank 3 in the application. Therefore, the codebook for Rank 3 should contain the most precoding matrices. As K4 is the minimum, it indicates that it is least likely for the system to use Rank 4 in the application. Therefore, the codebook for Rank 4 can only retain the most basic precoding matrices. By this design approach, the storage space of the system can be fully utilized to achieve optimal system performance.

It should be noted that, since the relationship between the selection probabilities determined for different Ranks is a relationship in terms of statistics, the codebook for each Rank does not need to be designed strictly according to the probability proportion. That is, assuming that the number of the precoding matrices included in the codebook for Rank n is Nn (n = 1, 2, 3, 4), it is not strictly required that N1: N2: N3: N4 = K1: K2: K3: K4. Preferably, if the selection probability for a first Rank is greater than the selection probability for a second Rank, the number of precoding matrices contained in the codebook for the first Rank is greater than or equal to the number of precoding matrices contained in the codebook for the second Rank. That is, when Ki > Kj, Ni ≥ Nj, where i, j = 1, 2, 3, 4. For example, as for the above situation of K3>K2>K1>K4, it is not strictly required for the Nn to have a relationship of N3>N2>N1>N4. Those skilled in the art can make a design according to actual situation after considering the probability relationship, for example, the design may be N3> N2 = N1 > N4. When Ki = Kj, Ni and Nj can be designed as required. In addition, the present invention makes no limitation to the number Nn of the precoding matrices contained in the codebook for each Rank and their total number N1+N2+N3+N4. The number Nn of the precoding matrices contained in the codebook for each Rank and the total number of the respective Nns can be designed by those skilled in the art as required.

For the case that the selection probability obtaining unit 910 is configured to obtain the selection probability for each Rank only with respect to a certain common SNR, the codebook size determining unit 920 is configured to determine the codebook size for each Rank only with respect to this SNR.

For the case that selection probability obtaining unit 910 is configured to respectively obtain the selection probability for each Rank with respect to multiple SNRs, the codebook size determining unit 920 is configured to determine the codebook size for each Rank respectively with respect to the multiple SNRs.

The codebook determining unit 930 is configured to determine, from a precoding matrix collection, a codebook for each Rank according to the codebook size for each rank in the case of the determined SNR.

Since the codebook size for each Rank has been determined by the codebook size determining unit 920, a corresponding number of precoding matrices can be selected from a precoding matrix collection to form the codebook for a corresponding Rank according to the codebook size. For example, the codebooks for the respective Ranks can be formed from the precoding matrix collection provided by the preceding embodiment which is designed based on π/6. There are many ways for selecting precoding matrices from the precoding matrix collection. For example, Nn precoding matrices can be arbitrarily selected from the origin codebook for Rank n in the precoding matrix collection to form the codebook for the Rank n. Preferably, the precoding matrices can be selected according to the contribution made by the respective precoding matrices to a performance parameter (such as throughput, mutual information, etc.) of the system, that is, the first Nn precoding matrices making the largest contribution to the performance parameter of the system are selected from the original codebook for Rank n in the precoding matrix collection to form the codebook for this Rank n. In the patent application No. 200910167422.7, entitled "Method and apparatus for generating precoding matrix codebook group" and filed on August 17, 2009, there is described how to select a precoding matrix according to its contribution to the performance parameter of the system. Therefore, it will not be described in detail herein.

For the case of obtaining the selection probability for each Rank only with respect to a certain common SNR and accordingly determining the codebook size for each Rank, the codebook determining unit 930 is configured to determine the codebook for each Rank only with respect to this SNR. Then, in the application of the multi-antenna system, the codebook that is determined according to the selection probability for each Rank with respect to this SNR is used regardless of the actual SNR. In this way, the storage space can be saved significantly and system performance can be improved on the basis of existing technologies.

For the case of respectively obtaining the selection probability for each Rank with respect to multiple SNRs and accordingly determining the codebook size for each Rank, the codebook determining unit 930 is configured to determine the codebook for each Rank respectively with respect to these SNRs. Therefore, in the application of the multi-antenna system, it is according to the actual SNR to selectively use the codebook that is determined according to the selection probability for each Rank with respect to the respective SNR. Although this method consumes more storage space than the former case, it can further improve the system performance.

According to a preferred embodiment, as shown in Figure 10, the apparatus 90 for generating a precoding matrix codebook also includes a grouping unit 940 for dividing the generated precoding matrix codebook into groups in order to reduce the communication overhead when delivering information on the precoding matrix. The specific grouping method has been illustrated above, which will not be repeated herein.

It should be noted that, although the above apparatus for generating a precoding matrix codebook is designed for the multi-antenna system with strong channel correlation, it is easy for those skilled in the art to understand that the apparatus is also available for a multi-antenna system without strong channel correlation, and this does not make a limitation to the application scope of the proposed apparatus according to this embodiment.

### Application of preceding matrix codebook

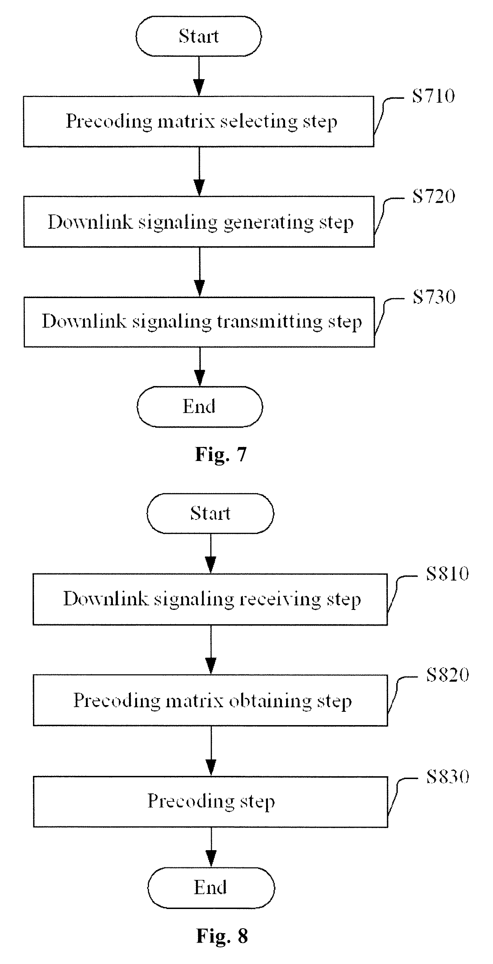

Figure 7 shows a flowchart of a method for designating a precoding matrix by a base station according to an embodiment of the present invention. The method can be used in a multi-antenna system which includes at least one base station and at least one mobile station.

As shown in Figure 7, in step S710, a precoding matrix selecting step is performed. The base station selects, from a precoding matrix codebook stored on the base station, a precoding matrix to be designated for communication between the base station and the mobile station, according to information of a signal received from the mobile station, wherein the precoding matrix codebook is generated according to the preceding embodiments, for example according to the methods shown in Figure 4 and Figure 6.

In step S720, a downlink signaling generating step is performed. The base station generates, based on the selected precoding matrix, downlink signaling which contains information indicating the selected precoding matrix.

Next, in step S730, a downlink signaling transmitting step is performed: transmitting the generated downlink signaling to the mobile station.

Accordingly, according to an embodiment of the present invention, there is provided a base station for a multi-antenna communication system, wherein the multi-antenna communication system includes at least one base station and at least one mobile station. The base station includes:

a first storing unit, configured to store at least one precoding matrix codebook;

a precoding matrix selecting unit, configured to select, from the at least one precoding matrix codebook stored in the first storing unit, a precoding matrix to be designated for communication between the base station and the mobile station, according to information of a signal received from the mobile station;

a downlink signaling generating unit, configured to generate, based on the selected precoding matrix, downlink signaling which contains information indicating the selected precoding matrix; and

a downlink signaling transmitting unit, configured to transmit the generated downlink signaling to the mobile station,

wherein the precoding matrix codebook stored in the first storing unit is generated according to the preceding embodiments, for example, according to the methods described in Figure 4 and Figure 6.

Figure 8 shows a flowchart of a method for performing precoding using a precoding matrix by a mobile station according to an embodiment of the present invention. The method can be used in a multi-antenna system which includes at least one base station and at least one mobile station.

As shown in Figure 8, in step S810, a downlink signaling receiving step is performed. The mobile station receives downlink signaling from the base station. The downlink signaling contains information indicating a precoding matrix designated by the base station and to be used for the communication between the base station and the mobile station.

In step S820, a precoding matrix obtaining step is performed. The mobile station obtains, from a precoding matrix codebook stored on the mobile station, the precoding matrix according to the information indicating the precoding matrix. The precoding matrix codebook is generated according to the preceding embodiments, for example according to the methods described in Figure 4 and Figure 6.

In step S830, a precoding step is performed. The mobile station precodes data to be transmitted to the base station with the obtained precoding matrix.

In this way, the data can be transmitted from the mobile station to the base station.

Accordingly, according to an embodiment of the present invention, there is provided a mobile station for a multi-antenna communication system, wherein the multi-antenna communication system includes at least one base station and at least one mobile station. The mobile station includes:

a second storing unit, configured to store at least one precoding matrix codebook;

a downlink signaling receiving unit, configured to receive downlink signaling from the base station, wherein the downlink signaling contains information indicating a precoding matrix designated by the base station and to be used for communication between the base station and the mobile station;

a precoding matrix obtaining unit, configured to obtain, from the precoding matrix codebook stored in the second storing unit, the precoding matrix according to the information indicating the precoding matrix; and

a precoding unit, configured to precode data to be transmitted to the base station by using the obtained precoding matrix,

wherein the precoding matrix codebook stored in the second storing unit is generated according to the preceding embodiments, for example according to the methods described in Figure 4 and Figure 6.

### Program product and storage medium

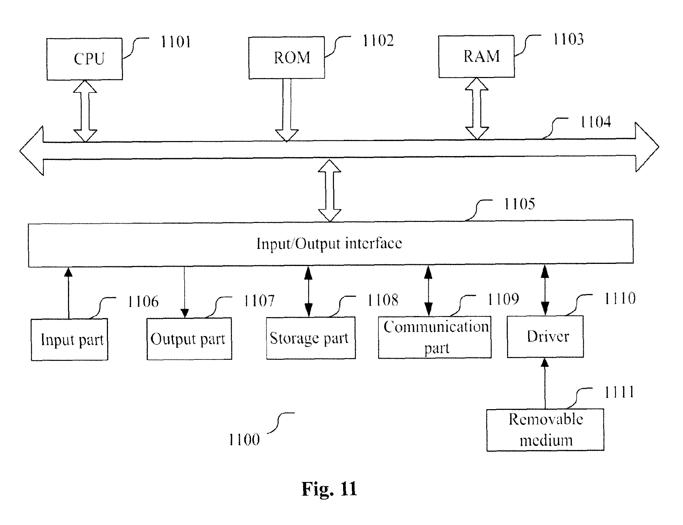

Modules and units in the above apparatus can be configured by way of software, firmware, hardware, or a combination thereof. The specific means or ways that can be used by the configuration are well known by those skilled in the art, which will not be described in detail herein. In the case of software or firmware implementation, programs constituting the software are installed to a computer with a dedicated hardware structure (such as a general-purpose computer 1100 shown in Figure 11) from a storage medium or a network, wherein the computer can execute various corresponding functions when being installed various programs.

In Figure 11, a central processing unit (CPU) 1101 executes various processing according to programs stored in a read-only memory (ROM) 1102 or programs loaded from a storage part 1108 to a random access memory (RAM) 1103. The RAM 1103 also, according to needs, stores data required when the CPU 1101 executes various processing. The CPU 1101, the ROM 1102 and the RAM 1103 are connected to each other via a bus 1104. An input/output interface 1105 is also connected to the bus 1104.

The following components are connected to the input/output interface 1105: an input part 1106 (including a keyboard, a mouse, etc.), an output part 1107 (including a display, such as a cathode ray tube (CRT), a liquid crystal display (LCD), a speakers, etc.), a storage part 1108 (including hard drives, etc.), a communication part 1109 (including a network interface card such as LAN cards, modems, etc.). The communication part 1109 executes communication processing via a network such as Internet. According to needs, the drive 1110 can also be connected to the input/output interface 1105. A removable medium 1111, such as a magnetic disk, an optical disk, a magneto-optical disk, a semiconductor memory, can be installed on the drive 1110 according to needs, so that the computer program read out therefrom is installed in the storage part 1108 according to needs.

In the case of implementing the above-mentioned series of processing through software, programs constituting the software are installed from a network such as the Internet or a storage medium such as the removable medium 1111.

Those skilled in the art should understand that, the storage medium is not limited to the removable storage medium 1111 shown in Figure 11 that stores programs and is distributed in a separated form with the equipment to provide a program to a user. Examples of the removable storage medium 1111 include a magnetic disk (including a floppy disk (registered trademark)), an optical disc (including a compact disc read-only memory (CD-ROM) and a digital versatile disk (DVD)), a magneto-optical disk (including a mini disk (MD) (Registration trademarks) and a semiconductor memory. Or, the storage medium may be the ROM 1102, a hard disk contained in the storage part 1108, etc. which have programs stored therein and are distributed to the user together with the equipment.

The present invention also provides a program product in which machine readable instruction codes are stored. The method according to the embodiments of the present invention can be executed when the instruction code is read and executed by the machine.

Accordingly, the storage medium for carrying the above program product in which the machine-readable instruction codes are stored is also included in the disclosure of the present invention. The storage medium includes but not limited to a floppy disk, an optical disk, a magneto-optical disk, a memory card, a memory stick, etc.

Finally, it should be noted that, the terms "include", "contain" or any other variations thereof are intended to cover non-exclusive "include", so that processes, methods, articles or equipments including a series of elements include not only those elements, but also include other elements without being explicitly listed, or also include inherent elements of the processes, methods, articles, or equipments. In addition, when there is no more limitation, the element defined by a phrase "include a ... " does not exclude that there are other same elements in the processes, methods, articles or equipments which include this element.

Although the embodiments of the present invention have been described above in conjunction with the drawings, it should be appreciated that the embodiments described above are only used for illustration and do not intend to limit the present invention. Numerous modifications and variations can be made to the above embodiment by those skilled in the art without deviation from the essence and scope of the present invention. Therefore, the scope of the invention is be defined only by the claims and equivalent meaning thereof.

## Claims

1. A method for generating a precoding matrix codebook, comprising:
a selection probability obtaining step: obtaining a selection probability for each Rank allowed by a multi-antenna communication system in the case of a determined signal noise Ratio;
a codebook size determining step: determining a precoding matrix codebook size for each Rank according to the selection probability for the Rank in the case of the determined signal noise ratio; and
a codebook determining step: determining, from a precoding matrix collection, a precoding matrix codebook for each rank according to the precoding matrix codebook size for the rank in the case of the determined signal noise ratio.

2. The method according to claim 1, wherein
the codebook size determining step comprises: making the precoding matrix codebook size for the first Rank greater than or equal to the precoding matrix codebook size for the second Rank when the selection probability for a first Rank is greater than the selection probability for a second Rank.

3. The method according to claim 1 or 2, wherein
the codebook determining step comprises: selecting, from all precoding matrix codebooks for a respective Rank in the precoding matrix collection, precoding matrices which make the largest contribution to a performance parameter of the system and the number of which is equal to the precoding matrix codebook size, so as to form the precoding matrix codebook for the Rank.

4. The method according to any one of the preceding claims, wherein a phase angle of each element of all the precoding matrices in the precoding matrix collection is an integral multiple of π/6.

5. The method according to any one of the preceding claims, further comprising:
a grouping step: performing grouping on the determined precoding matrix codebook for each Rank.

6. The method according to any one of the preceding claims, wherein
the determined signal noise ratio is a common signal noise ratio or a plurality of signal noise ratios.

7. A method for designating a precoding matrix by a base station in a multi-antenna communication system, wherein the multi-antenna communication system comprises at least one base station and at least one mobile station, the method comprising:
a precoding matrix selecting step: selecting, by the base station, from at least one precoding matrix codebook stored on the base station, a precoding matrix to be designated for communication between the base station and the mobile station, according to information of a signal received from the mobile station;
a downlink signaling generating step: generating, based on the selected precoding matrix, downlink signaling which contains information indicating the selected precoding matrix; and
a downlink signaling transmitting step: transmitting the generated downlink signaling to the mobile station,
wherein the at least one precoding matrix codebook stored on the base station is a precoding matrix codebook generated by the method according to any one of claims 1 to 6.

8. A method for performing precoding by a mobile station in a multi-antenna communication system by using a precoding matrix, wherein the multi-antenna communication system comprises at least one base station and at least one mobile station, the method comprising:
a downlink signaling receiving step: receiving, by the mobile station, downlink signaling from the base station, wherein the downlink signaling contains information indicating a precoding matrix designated by the base station and to be used for communication between the base station and the mobile station;
a precoding matrix obtaining step: obtaining, from at least one precoding matrix codebook stored on the mobile station, the precoding matrix according to the information indicating the precoding matrix; and
a precoding step: precoding data to be transmitted to the base station by using the obtained precoding matrix,
wherein the at least one precoding matrix codebook stored on the mobile station is a precoding matrix codebook generated by the method according to any one of claims 1 to 6.

9. An apparatus (90) for generating a precoding matrix codebook, comprising:
a selection probability obtaining unit (910), configured to obtain a selection probability for each Rank allowed by a multi-antenna communication system in the case of a determined signal noise Ratio;
a codebook size determining unit (920): configured to determine a precoding matrix codebook size for each Rank according to the selection probability for the Rank in the case of the determined signal noise ratio; and
a codebook determining unit (930): configured to determine, from a precoding matrix collection, a precoding matrix codebook for each rank according to the precoding matrix codebook size for the rank in the case of the determined signal noise ratio.

10. The apparatus (90) according to claim 9, wherein the codebook size determining unit (920) is configured to make the precoding matrix codebook size for a first Rank greater than or equal to the precoding matrix codebook size for a second Rank when the selection probability for the first Rank is greater than the selection probability for the second Rank.

11. The apparatus (90) according to claim 9 or 10, wherein
the codebook determining unit (930) is configured to select, from all precoding matrix codebooks for a respective Rank in the precoding matrix collection, precoding matrices which make the largest contribution to a performance parameter of the system and the number of which is equal to the precoding matrix codebook size, to form the precoding matrix codebook for the Rank.

12. The apparatus (90) according to any one of claims 9 to 11, wherein the phase angle of each element of all the precoding matrices in the precoding matrix collection is an integral multiple of π/6.

13. The apparatus (90) according to any one of claims 9 to 11, further comprising:
a grouping unit (940), configured to perform grouping on the determined precoding matrix codebook for each Rank.

14. The apparatus (90) according to any one of claims 9 to 11, wherein
the determined signal noise ratio is a common signal noise ratio or a plurality of signal noise ratios.

15. A base station for a multi-antenna communication system, wherein the multi-antenna communication system comprises at least one base station and at least one mobile station, the base station comprising:
a first storing unit, configured to store at least one precoding matrix codebook;
a precoding matrix selecting unit, configured to select, from the at least one precoding matrix codebook stored in the first storing unit, a precoding matrix to be designated for communication between the base station and the mobile station, according to information of a signal received from the mobile station;
a downlink signaling generating unit, configured to generate, based on the selected precoding matrix, downlink signaling which contains information indicating the selected precoding matrix; and
a downlink signaling transmitting unit, configured to transmit the generated downlink signaling to the mobile station,
wherein the at least one precoding matrix codebook stored in the first storing unit is a precoding matrix codebook generated by the method according any one of claim 1 to 6.

16. A mobile station for a multi-antenna communication system, wherein the multi-antenna communication system comprises at least one base station and at least one mobile station, the mobile station comprising:
a second storing unit, configured to store at least one precoding matrix codebook;
a downlink signaling receiving unit, configured to receive downlink signaling from the base station, wherein the downlink signaling contains information indicating a precoding matrix designated by the base station and to be used for communication between the base station and the mobile station;
a precoding matrix obtaining unit, configured to obtain, from the at lest one precoding matrix codebook stored in the second storing unit, the precoding matrix according to the information indicating the precoding matrix; and
a precoding unit, configured to precode data to be transmitted to the base station by using the obtained precoding matrix,
wherein the at least one precoding matrix codebook stored in the second storing unit is a precoding matrix codebook generated by the method according to any one of claims 1 to 6.

17. A program product comprising machine executable instructions which when being executed on an information processing device, allow the information processing device to execute the method according to any one of claims 1 to 6.

18. A storage medium comprising machine readable program codes which when being executed on an information processing device, allow the information processing device to execute the method according to any one of claims 1 to 6.
